# EUROPEAN PATENT APPLICATION

(11) **EP 1 770 742 A2**
(43) Date of publication of application: **04.04.2007**
(21) Application number: 06250974.0
(22) Date of filing: 23.02.2006
(51) Int. Cl.: H01J 1/304, H01J 1/312

(54) **Electron emitter and method for manufacturing electron emitter**

(30) Priority: 28.09.2005 JP 2005281277
(71) Applicant: NGK INSULATORS, LTD., Nagoya-City, Aichi Pref. 467-8530 (JP)
(72) Inventor: Ohwada, Iwao, NGK Insulators, Ltd., Nagoya City Aichi-ken 467-8530 (JP); Ozawa, Shuichi, NGK Insulators, Ltd., Nagoya City Aichi-ken 467-8530 (JP); Yoshino, Koichi, NGK Insulators, Ltd., Nagoya City Aichi-ken 467-8530 (JP); Yokoyama, Shohei, NGK Insulators, Ltd., Nagoya City Aichi-ken 467-8530 (JP)
(74) Representative: Naylor, Matthew John

(57) **Abstract**

An electron emitter includes an emitter layer composed of a dielectric material, a first electrode disposed onto a first surface of the emitter layer, and a second electrode disposed onto the first surface, inside, or onto a second surface opposite to the first surface of the emitter layer. A microscopic recess is disposed on a surface of the first electrode. Alternatively, an opening is disposed in the first electrode, the opening exposing the first surface of the emitter layer to the outside of the electron emitter, and a plurality of microscopic protrusions are disposed along the thickness direction of the first electrode at an inner edge of the opening.

## Description

### BACKGROUND OF THE INVENTION

### 1. Field of the Invention

The present invention relates to an electron emitter which can emit electrons when a predetermined electric field is applied. Furthermore, the invention relates to a method for manufacturing the electron emitter.

### 2. Description of the Related Art

In an electron emitter of such a type, when a predetermined electric field is applied to an emitter section in a vacuum atmosphere with a predetermined vacuum level, electrons are emitted from the emitter section.

Electron emitters are used as electron beam sources in various devices using electron beams. Examples of such devices include displays, in particular, field emission displays (FEDs), electron beam irradiation devices, light source devices, electronic component manufacturing equipment, and electronic circuit components.

When electron emitters are used in an FED, a plurality of electron emitters are two-dimensionally arrayed in the FED. A plurality of phosphors are disposed on the corresponding plurality of electron emitters with a predetermined separation therebetween.

In the FED having the structure described above, for example, by selectively driving electron emitters located at predetermined positions from the plurality of electron emitters two dimensionally arrayed, electrons are emitted from the electron emitters located at the predetermined positions. The emitted electrons collide with phosphors to emit fluorescence from the phosphors located at the predetermined positions, and thus a desired display is performed.

Electron beam irradiation devices are, for example, used in the application of solidifying insulating films when wafers are stacked in the manufacturing processes of semiconductor chips. Furthermore, electron beam irradiation devices are used in the application of hardening/drying printing ink, and also used in the application of sterilizing medical devices while being kept in packages. In the electron beam irradiation devices, the output can be easily increased, and the irradiated beam-absorption efficiency in the objects which are irradiated can be increased, in comparison with ultraviolet irradiation devices which have been conventionally used in the applications described above.

Examples of suitable light source devices in which electron emitters are applied include light source devices requiring high luminance and high efficiency. Specific examples thereof include light source devices for projectors. In comparison with extra-high pressure mercury lamps which have been conventionally used as the light source devices of this type, in the light source devices including the electron emitters, it is possible to achieve a reduction in size, an increase in lifetime, an increase in speed, and a reduction in environmental load. Light source devices including electron emitters are also used as substitutes for LEDs. Such light source devices are, for example, used as interior lighting apparatuses, automotive lamps, signals, and backlights of small-sized liquid crystal displays for mobile phones. Furthermore, by combining electron emitters and phosphors, it is possible to fabricate light-emitting devices for exposing photoconductor drums in electrophotographic apparatuses.

Examples of electronic component manufacturing equipment in which electron emitters are applied include electron beam sources for film deposition apparatuses, such as electron-beam vapor deposition apparatuses; electron sources for producing plasma (for activating gas or the like) in plasma CVD apparatuses; and electron sources for gas decomposition.

Examples of electronic circuit components in which electron emitters are applied include digital devices, such as switches, relays, and diodes; and analog devices, such as operational amplifiers. When electron emitters are used for such electronic circuit components, it is possible to achieve an increase in current output and an increase in the amplification factor.

Electron emitters can be used in other applications. For example, electron emitters are suitable for use in vacuum microdevices, such as terahertz-driven high-speed switching devices and high-current output devices. Electron emitters can also be suitably used as electron sources for charging dielectric materials.

Specific examples of the electron emitters include those described in Japanese Unexamined Patent Application Publications No. 7-147131 (Patent Document 1), No. 2000-285801 (Patent Document 2), No. 2004-146365 (Patent Document 3), No. 2004-172087 (Patent Document 4), No. 2005-116232 (Patent Document 5), and No. 2005-142134 (Patent Document 6).

In the electron emitter described in each of Patent Documents 1 and 2, an emitter section is composed of a fine conductor electrode having a sharp tip. In such an electron emitter, a counter electrode is disposed so as to face the emitter section. When a predetermined drive voltage is applied between the counter electrode and the emitter section, electrons are emitted from the tip of the emitter section.

In the manufacturing process of the electron emitter according to Patent Document 1 or 2, in order to form the emitter section composed of the conductor electrode having the fine structure described above, micromachining by etching, electro fine forming, or the like, must be performed, resulting in a complex manufacturing process.

Furthermore, in the electron emitter according to Patent Document 1 or 2, in order to emit a sufficient amount of electrons from the tip of the conductor electrode, a high voltage must be applied as the drive voltage. Consequently, as a drive element, such as an IC, for driving the electron emitter, an expensive element capable of high-voltage driving is required.

As described above, in the electron emitter including the emitter section composed of the conductor electrode according to Patent Document 1 or 2, the manufacturing costs of the electron emitter and the apparatus in which the electron emitter is applied are high, which are disadvantageous.

Under these circumstances, an electron emitter including an emitter section composed of a dielectric thin film has been conceived, for example, as disclosed in Patent Document 3, 4, 5, or 6. Hereinafter, such an electron emitter will be referred to as a "dielectric-film-type electron emitter".

The dielectric-film-type electron emitter according to each of Patent Documents 3 to 6 includes the emitter section, a cathode electrode, and an anode electrode. The cathode electrode is disposed on a front surface side (electron emission side) of the emitter section. The anode electrode is disposed on a reverse surface side of the emitter section, or on the front surface side of the emitter section and at a position separated with a predetermined distance from the cathode electrode. That is, the dielectric-film-type electron emitter is designed such that an exposed portion of the surface of the emitter section lies near the peripheral portion of the cathode electrode.

The dielectric-film-type electron emitter operates as follows:
In the first stage, a voltage is applied between the cathode electrode and the anode electrode such that the potential of the cathode electrode is higher than that of the anode electrode. The emitter section (in particular, the exposed portion) is set in a predetermined polarization state by an electric field produced by the voltage applied.
In the second stage, a voltage is applied between the cathode electrode and the anode electrode such that the potential of the cathode electrode is lower than that of the anode electrode. In this stage, electrons are emitted from the peripheral portion of the cathode electrode, polarization reversal occurs in the emitter section, and electrons are accumulated on the surface of the emitter section. When a voltage is applied again such that the potential of the cathode electrode is higher than that of the anode electrode, polarization reversal occurs in the emitter section, and as a result, the accumulated electrons are emitted due to electrostatic repulsion from the dipoles. The electrons fly in a certain direction in the presence of a certain electric field applied from outside, and thus electron emission is performed by this dielectric-film-type electron emitter.

### SUMMARY OF THE INVENTION

The present invention is directed to a dielectric-film-type electron emitter which can achieve a higher output compared with the conventional electron emitters described above.

In one aspect of the present invention, an electron emitter includes an emitter layer, a first electrode, and a second electrode. The emitter layer is composed of a dielectric material. Preferably, the emitter layer is composed of a ferroelectric material. The first electrode is disposed onto a first surface of the emitter layer. The second electrode is disposed onto the first surface, inside, or onto a second surface opposite to the first surface of the emitter layer.

The present invention is characterized in that a microscopic recess is formed on the surface of the first electrode. Preferably, the microscopic recess is formed such that the depth at the deepest part is 10 nm or more and is 90% or less, and more preferably 50% or less, of the thickness of the first electrode. Furthermore, the planar shape (i.e., the shape viewed from a direction parallel to the depth direction of the recess) of the recess is not particularly limited, and may be, for example, slit-like, elliptical, rectangular, or irregular.

In such a structure, electron emission occurs as follows: First, a drive voltage having a predetermined negative polarity is applied between the first electrode and the second electrode (such that the potential of the first electrode is lower than that of the second electrode). Thereby, the polarization state in the vicinity of the first surface of the emitter layer is set in a predetermined state. Electrons are supplied from the first electrode to the first surface and accumulated on the first surface. That is, the first surface is charged.

At this moment, in this structure, the microscopic recess is formed on the surface of the first electrode. The recess constitutes a portion in which an electric field concentrates (i.e., a sharp edge portion in which lines of electric force easily concentrate; hereinafter, a state in which lines of electric force concentrate may be referred to as "electric field concentration" and the portion may also be referred to as "electric field concentration portion"). A large amount of electrons is supplied from the electric field concentration portion toward the first surface.

Subsequently, a drive voltage having a predetermined positive polarity is applied between the first electrode and the second electrode (such that the potential of the first electrode is higher than that of the second electrode). Thereby, the polarization is reversed. The electrons accumulated on the first surface are emitted due to the polarization reversal.

As described above, according to this structure, the amount of electron emission is increased compared with the conventional case. That is, it is possible to obtain a high-output electron emitter.

A gap may be formed between an edge of the first electrode and the first surface of the emitter layer.

In such a structure, the edge of the first electrode is formed in an overhanging shape, and the gap is formed below the overhang.

In such a structure, the electric field intensity at the gap is higher than the electric field intensity in the emitter layer, and substantially most of the drive voltage is applied to the gap. That is, the electric field formed by the drive voltage concentrates in the gap. Thereby, it is possible to emit electrons with high output while maintaining a low drive voltage.

An opening may be formed in the first electrode. The opening is formed such that the first surface of the emitter layer is exposed to the outside of the electron emitter.

In such a structure, supply of electrons from the first electrode to the first surface and emission of electrons from the first surface occur at a larger number of points, i.e., at an inner edge of the opening of the first electrode, and at an outer edge which corresponds to an outline of the first electrode in plan view. Consequently, in this structure, the amount of electron emission is further increased. That is, it is possible to obtain a higher-output electron emitter.

In such a structure, the opening is capable of functioning as a gate electrode or a focusing electron lens with respect to electrons emitted from the first surface of the emitter layer. Thereby, it is possible to improve rectilinear propagation of the emitted electrons. Consequently, when a plurality of electron emitters are arrayed two-dimensionally, the crosstalk between adjacent electron emitters is reduced. In particular, when the electron emitters are used in an FED, the resolution of the FED is improved.

The recess may be formed at the opening and/or in the vicinity thereof. In such a case, for example, the recess may be formed at the edge constituting the opening of the first electrode. The recess may be formed inside surface of the opening. Alternatively, the recess may be formed on the surface of the first electrode which is immediately outside the opening. Furthermore, the first electrode may be formed so as to have a plurality of fine steps (irregularities) along a direction perpendicular to the thickness direction of the first electrode.

In such a structure, many electric field concentration portions are formed in the vicinity of the opening. Consequently, in such a structure, a larger amount of electrons can be accumulated on the first surface and emitted from the first surface.

Here, the end of a protrusion formed on each side in the width direction (a direction perpendicular to the longitudinal direction) of the recess is preferably formed in a sharp shape. For example, the end is preferably formed so as to have an acute angle. Alternatively, the end is preferably formed in a shape that is not rounded or chamfered. Thereby, the electric field concentration at the end becomes more significant. As a result, a larger amount of electrons can be accumulated on the first surface and emitted from the first surface.

The first electrode may be composed of graphite. Thereby, the first electrode can be formed less expensively. Furthermore, the opening can be formed by a simpler manufacturing process.

The electron emitter may contain electrically conductive fine particles adhering to the surface of the first electrode. The fine particles may be, for example, composed of silver, platinum, gold, copper, or an alloy thereof. Alternatively, the fine particles may be composed of a non-metallic electrically conductive material.

In such a structure, the fine particles function as the electric field concentration portions. Thereby, in such a structure, a larger number of electric field concentration portions can be formed. Consequently, in such a structure, a larger amount of electrons can be accumulated on the first surface and emitted from the first surface.

Here, the fine particles are preferably composed of silver or an alloy containing silver. The fine particles composed of silver or an alloy containing silver serve as a catalyst that decomposes graphite under heating. Consequently, by such a component, the graphite constituting the first electrode is decomposed and/or eroded away through a heating step (heat treatment step) at a predetermined temperature in the manufacturing process for forming the first electrode. That is, by this component, the recess and the opening can be formed through an extremely simple manufacturing process. Even if the material constituting the fine particles is other than silver or an alloy containing silver, a material that serves as a catalyst which decomposes graphite under heating can be suitably used as the fine particles. Examples thereof include gold, platinum, copper, and an alloy thereof.

The fine particles may include small-sized fine particles and large-sized fine particles having a larger particle size than that of the small-sized fine particles. In such a case, preferably, both fine particles having a particle size of 100 nm or less and fine particles having a particle size of 600 nm or more coexist with each other. Furthermore, in the particle size distribution, in each of a range of 300 nm or less and a range of more than 300 nm, preferably, the fine particles have at least one peak. That is, preferably, the average particle size of the small-sized fine particles is 300 nm or less, and the average particle size of the large-sized fine particles is more than 300 nm. In such a case, more preferably, the average particle size of the large-sized fine particles is 500 nm or more.

In the case where the fine particles are composed of silver, when graphite constituting the first electrode is decomposed and/or eroded away by the small-sized fine particles in a small region, the recess can be formed. When graphite constituting the first electrode is decomposed and/or eroded away by the large-sized fine particles in a large region, the opening can be formed.

The electron emitter may further include a substrate, and the emitter layer may be fixed to a surface of the substrate. The substrate is disposed on the second surface of the emitter layer so as to support the emitter layer.

The second electrode may be fixed to the surface of the substrate, and the emitter layer may be fixed to the second electrode.

In another aspect of the present invention, an electron emitter includes an emitter layer, a first electrode, and a second electrode. The emitter layer is composed of a dielectric material. Preferably, the emitter layer is composed of a ferroelectric material. The first electrode is disposed onto a first surface of the emitter layer. The first electrode is provided with an opening. The opening is formed such that the first surface of the emitter layer is exposed to outside of the electron emitter. The second electrode is disposed onto the first surface, inside, or onto a second surface opposite to the first surface of the emitter layer.

The present invention is characterized in that a plurality of microscopic protrusions are formed at an inner edge of the opening so as to be disposed along the thickness direction of the first electrode. Preferably, the protrusions are formed such that the height is 7 nm or more and is 90% or less, and more preferably 50% or less, of the thickness of the first electrode. Furthermore, the planar shape (i.e., the shape viewed from a direction parallel to the height direction of the protrusion) of each protrusion is not particularly limited, and may be, for example, thin plate-like, elliptical, rectangular, polygonal, or irregular.

In such a structure, electron emission occurs as follows: First, the drive voltage having the negative polarity is applied between the first electrode and the second electrode. Thereby, the polarization state in the vicinity of the first surface of the emitter layer is set in a predetermined state. Electrons are supplied from the first electrode to the first surface and accumulated on the first surface. That is, the first surface is charged.

In this structure, a plurality of microscopic protrusions are disposed along the thickness direction of the first electrode on the inner edge of the opening. The microscopic protrusions constitute the electric field concentration portion (i.e., a sharp edge portion in which lines of electric force easily concentrate). Since the electric field concentration portion is formed on the inner edge of the opening, the electric field concentration portion is located in the vicinity of the first surface which is subjected to accumulation and emission of electrons. Consequently, a large amount of electrons is supplied from the electric field concentration portion toward the first surface.

Subsequently, the drive voltage having the positive polarity is applied between the first electrode and the second electrode. Thereby, the polarization is reversed. The electrons accumulated on the first surface are emitted due to the polarization reversal.

As described above, according to this structure, the amount of electron emission is increased compared with the conventional case. That is, it is possible to obtain a high-output electron emitter.

Furthermore, the opening is capable of functioning as a gate electrode or a focusing electron lens to electrons emitted from the first surface of the emitter layer. Thereby, it is possible to improve rectilinear propagation of the emitted electrons. Consequently, when a plurality of electron emitters are arrayed two-dimensionally, the crosstalk between adjacent elements is reduced. In particular, when the electron emitters are used in an FED, the resolution of the FED is improved.

Preferably, the protrusions are also formed in the area which is outside as well as vicinity of the opening.

In such a structure, many electric field concentration portions are formed in the vicinity of the opening. Consequently, in such a structure, a larger amount of electrons can be accumulated on the first surface and emitted from the first surface.

A gap may be formed between the edge at the opening and the first surface.

In such a structure, the edge of the first electrode is formed in an overhanging shape, and the gap is formed below the overhang.

In such a structure, as described above, an electric field produced by the drive voltage concentrates in the gap. Thereby, it is possible to emit electrons with high output while maintaining a low drive voltage.

The first electrode may be composed of graphite. Thereby, the first electrode can be formed less expensively. Furthermore, the opening can be formed by a simpler manufacturing process.

The electron emitter may further contain electrically conductive fine particles adhering to the surface of the first electrode. The fine particles may be, for example, composed of silver, platinum, gold, copper, or an alloy thereof. Alternatively, the fine particles may be composed of a non-metallic electrically conductive material.

In such a structure, the fine particles function as the electric field concentration portions. Thereby, in such a structure, a larger number of electric field concentration portions can be formed. Consequently, in such a structure, a larger amount of electrons can be accumulated on the first surface and emitted from the first surface.

Here, the fine particles are preferably composed of silver or an alloy containing silver. In such a structure, in the manufacturing process for forming the first electrode, by performing a heating step (heat treatment step) at a predetermined temperature, the graphite constituting the first electrode is decomposed and/or eroded away. Thereby, the protrusions and the opening are formed. That is, in this structure, the protrusions and the opening can be formed by an extremely simple manufacturing process. Even if the material constituting the fine particles is other than silver or an alloy containing silver, a material that serves as a catalyst which decomposes graphite under heating can be suitably used as the fine particles. Examples thereof include gold, platinum, copper, and an alloy thereof.

Preferably, the fine particles include small-sized fine particles and large-sized fine particles having a larger particle size than that of the small-sized fine particles. In such a case, preferably, both fine particles having a particle size of 100 nm or less and fine particles having a particle size of 600 nm or more coexist with each other in the fine particles. Furthermore, in the particle size distribution, in each of a range of 300 nm or less and a range of more than 300 nm, preferably, the fine particles have at least one peak. That is, preferably, the average particle size of the small-sized fine particles is 300 nm or less, and the average particle size of the large-sized fine particles is more than 300 nm. In such a case, more preferably, the average particle size of the large-sized fine particles is 500 nm or more.

In the case where the fine particles are composed of silver, when the graphite constituting the first electrode is decomposed and/or eroded away by the small-sized fine particles over a small range, the protrusions can be formed. When the graphite constituting the first electrode is decomposed and/or eroded away by the large-sized fine particles over a large range, the opening can be formed.

The electron emitter may further include a substrate, and the emitter layer may be fixed to a surface of the substrate. The substrate is disposed on the second surface of the emitter layer so as to support the emitter layer.

The second electrode may be fixed to the surface of the substrate, and the emitter layer may be fixed to the second electrode.

In another aspect of the present invention, a method for manufacturing an electron emitter includes a paste preparation step, a paste layer formation step, a first heat treatment step, and a second heat treatment step.

The method for manufacturing the electron emitter according to the present invention is performed as follows: First, graphite, fine particles that can decompose the graphite under heating at a predetermined graphite decomposition temperature or higher, and a binder composed of a synthetic resin are mixed. Thereby, an electrode forming paste is prepared (paste preparation step). As the graphite, for example, powdered graphite can be suitably used. As the fine particles, for example, fine particles composed of silver, platinum, gold, copper, or an alloy thereof can be used. Furthermore, as the fine particles, fine particles composed of, for example, an oxide of bismuth (Bi), vanadium (V), antimony (Sb), or molybdenum (Mo) can also be used.

Subsequently, a layer of the electrode forming paste prepared in the paste preparation step is formed on a dielectric layer constituting the emitter layer (paste layer formation step).

Subsequently, the layer of the electrode forming paste formed in the paste layer formation step is heat-treated at a temperature lower than the graphite decomposition temperature (first heat treatment step). Thereby, most of the binder is decomposed or vaporized before the fine particles are coarsened and before the decomposition and/or erosion of the graphite constituting the first electrode occurs.

After the first heat treatment step, the layer of the electrode forming paste is heat-treated at a temperature equal to or higher than the graphite decomposition temperature (second heat treatment step). Thereby, the graphite constituting the first electrode is decomposed and/or eroded away by the fine particles to form the recess or the protrusions.

Thus, the first electrode is formed from the layer of the electrode forming paste.

In such a manufacturing method, the first electrode having the recess or the protrusions on the surface can be formed by a simple manufacturing process.

The binder used in the paste preparation step is preferably composed of a material in which the temperature at the rising edge of a peak on the lowest temperature side in a differential thermal analysis curve (i.e., binder thermal decomposition initiation temperature) is lower than the graphite decomposition temperature.

In such a manufacturing method, in the first heat treatment step, the binder is more rapidly decomposed or vaporized while the fine particles have a smaller particle size. Consequently, the recess or the protrusions having a finer structure can be formed more reliably.

Preferably, the fine particles serve as a catalyst which decomposes the graphite, and in this case, the "graphite decomposition temperature" corresponds to the decomposition temperature of the graphite in the presence of the catalyst. That is, the temperature at which the graphite itself (i.e., without catalyst) is oxidized and/or decomposed by heating is generally higher than 550°C, while in the presence of a catalyst, the graphite can be decomposed at 550°C or lower. For example, in the presence of silver, the graphite can be decomposed at a temperature lower than 400°C and can be actively decomposed at 400°C to 450°C.

Thereby, the recess or the protrusions described above can be formed by a simpler process reliably.

In another aspect of the present invention, a method for manufacturing an electron emitter includes a paste preparation step, a paste layer formation step, and a heat treatment step.

The method for manufacturing the electron emitter according to the present invention is performed as follows: First, graphite, fine particles that can decompose the graphite under heating at a predetermined graphite decomposition temperature or higher, and a binder composed of a synthetic resin that can be decomposed or vaporized at a temperature lower than the graphite decomposition temperature are mixed. Thereby, an electrode forming paste is prepared (paste preparation step). As the graphite, for example, powdered graphite can be suitably used.

Subsequently, a layer of the electrode forming paste prepared in the paste preparation step is formed on a dielectric layer constituting the emitter layer (paste layer formation step).

Subsequently, the layer of the electrode forming paste formed in the paste layer formation step is heat-treated (heat treatment step).

Thus, the first electrode is formed from the layer of the electrode forming paste.

In such a manufacturing method, the first electrode having the recess or the protrusions on the surface can be formed by a simple manufacturing process.

The binder used in the paste preparation step is preferably composed of a material in which the temperature corresponding to an apex of a peak on the lowest temperature side in a differential thermal analysis curve (binder thermal decomposition peak temperature) is lower than the graphite decomposition temperature.

Preferably, the fine particles serve as a catalyst which decomposes the graphite, and in this case, the "graphite decomposition temperature" corresponds to the decomposition temperature of the graphite in the presence of the catalyst. Thereby, the recess or the protrusions described above can be formed by a simpler process reliably.

The heat treatment step may include a first heat treatment step and a second heat treatment step. In the first heat treatment step, the layer of the electrode forming paste formed in the paste layer formation step is heat-treated at a temperature lower than the graphite decomposition temperature. The heat treatment temperature in the first heat treatment step is preferably 50°C or more lower, and more preferably 100°C or more lower, than the graphite decomposition temperature. In the second heat treatment step, after the first heat treatment step, the layer of the electrode forming paste is heat-treated at a temperature equal to or higher than the graphite decomposition temperature.

In such a manufacturing method, the layer of the electrode forming paste prepared and formed in the paste preparation step and the paste layer formation step is subjected to heat treatment at a temperature lower than the graphite decomposition temperature (first heat treatment step). Thereby, (most of) the binder is decomposed or vaporized. Subsequently, the layer of the electrode forming paste is heat-treated at a temperature equal to or higher than the graphite decomposition temperature (second heat treatment step). Thereby, the graphite constituting the first electrode is decomposed and/or eroded away by the fine particles to form the recess or the protrusions.

In such a manufacturing method, the recess or the protrusions can be formed more reliably.

The heat treatment step may be a one-stage heat treatment step instead of the two-stage heat treatment step including the first heat treatment step and the second heat treatment step. The one-stage heat treatment step corresponds to a step in which the layer of the electrode forming paste formed in the paste layer formation step is heat-treated at a temperature higher than the graphite decomposition temperature.

When the one-stage heat treatment step is performed as the heat treatment step, in the binder, preferably, the temperature corresponding to an apex of a peak on the lowest temperature side in a differential thermal analysis curve (binder thermal decomposition peak temperature) is lower than the graphite decomposition temperature. When the two-stage heat treatment step is performed as the heat treatment step, in the binder, preferably, the temperature at the rising edge of a peak on the lowest temperature side in a differential thermal analysis curve (i.e., binder thermal decomposition initiation temperature) is lower than the graphite decomposition temperature.

The reason for this is that in order to form the microscopic recess or protrusions satisfactorily, at the time when decomposition and/or erosion of the graphite constituting the first electrode layer are initiated by the fine particles, the fine particles must not be coarsened and most of the binder must be decomposed. That is, since most of the binder is decomposed before the decomposition and/or erosion of the graphite constituting the first electrode layer are initiated by the fine particles and before the fine particles are coarsened, the fine particles with a relatively small particle size can be present on the surface of the graphite. Since the graphite is decomposed and/or eroded away by the fine particles with a relatively small particle size, the microscopic recess or protrusions can be formed satisfactorily.

When the two-stage heat treatment step is employed, in the first heat treatment step in which the temperature is lower than that in the second heat treatment step, before the fine particles are coarsened, most of the binder is decomposed or vaporized. Therefore, in such a case, at least the binder thermal decomposition initiation temperature must be lower than the graphite decomposition temperature. On the other hand, when one-stage heat treatment step is employed, the binder must be rapidly decomposed or vaporized before the fine particles are coarsened and before the decomposition and/or erosion of the graphite occur. Therefore, in such a case, the binder thermal decomposition peak temperature must be lower than the graphite decomposition temperature.

### BRIEF DESCRIPTION OF THE DRAWINGS

FIG. 1 is an enlarged partial cross-sectional view of a display provided with an electron emitter according to an embodiment of the present invention;
FIG. 2 is an enlarged cross-sectional view of a substantial part of the electron emitter shown in FIG. 1;
FIG. 3 is an equivalent circuit diagram of the electron emitter shown in FIG. 1;
FIG. 4 is an equivalent circuit diagram of the electron emitter shown in FIG. 1;
FIG. 5 is a chart showing an output waveform of a pulse generation source shown in FIG. 1;
FIGS. 6A to 6C are each a schematic diagram used for describing the operation of the electron emitter shown in FIG. 1;
FIGS. 7A to 7C are each a schematic diagram used for describing the operation of the electron emitter shown in FIG. 1 (continuation of FIGS. 6A to 6C);
FIG. 8 is a differential thermal analysis chart of a binder;
FIG. 9 is a graph showing the amount of electron emission of an electron emitter in each of Example and Comparative Example;
FIG. 10A is an enlarged scanning electron micrograph of an upper electrode in Example, and FIG. 10B is an enlarged scanning electron micrograph of an upper electrode in Comparative Example;
FIG. 11A is an enlarged scanning electron micrograph of an upper electrode in Example, and FIG. 11 B is an enlarged scanning electron micrograph of an upper electrode in Comparative Example; and
FIG. 12A is an enlarged scanning electron micrograph of an upper electrode in Example, and FIG. 12B is an enlarged scanning electron micrograph of an upper electrode in Comparative Example.

### DESCRIPTION OF THE PREFERRED EMBODIMENTS

Preferred embodiments of the present invention will be described below with reference to the drawings.

### (Overall structure of FED including electron emitter)

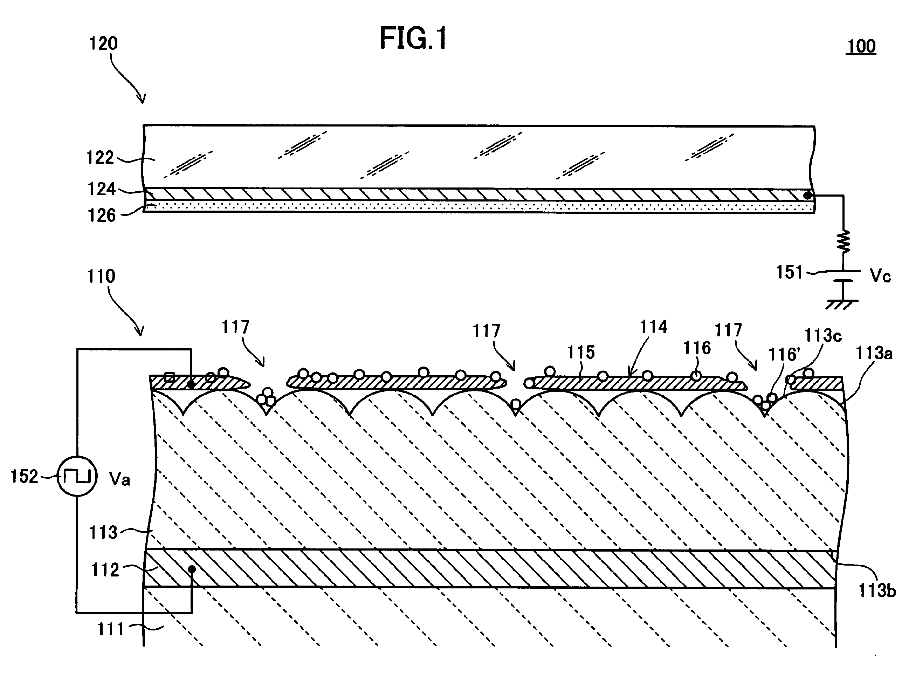

FIG. 1 is an enlarged partial cross-sectional view of a display 100 which is an FED provided with an electron emitter according to an embodiment of the present invention. The display 100 includes an electron emitter 110 according to the embodiment of the present invention and a display portion 120 disposed so as to face the electron emitter 110. A space between the electron emitter 110 and the display portion 120 is set to be a reduced-pressure atmosphere having a predetermined degree of vacuum (e.g., 10² to 10⁻⁶ Pa, more preferably 10⁻³ to 10⁻⁵ Pa).

The display portion 120 includes a transparent plate 122, a collector electrode 124, a phosphor layer 126. The transparent plate 122 is composed of a glass or acrylic plate. The collector electrode 124 is disposed on the lower surface (i.e., the surface facing the electron emitter 110) of the transparent plate 122. The collector electrode 124 is composed of a transparent, electrically conductive material, such as an indium tin oxide (ITO) thin film. The phosphor layer 126 is disposed on the lower surface of the collector electrode 124. A high-potential side output terminal of a bias voltage source 151 which outputs a collector voltage Vc is connected to the collector electrode 124.

In the display 100, electrons emitted from the electron emitter 110 are allowed to fly toward the collector electrode 124 by an electric field produced in the space by application of a collector voltage Vc, and the electrons collide with the phosphor layer 126 to emit fluorescence. Thus, light is emitted from predetermined pixels.

### (Overall structure of electron emitter)

The electron emitter 110 includes a substrate 111, a lower electrode 112, an emitter layer 113, and an upper electrode 114.

The substrate 111 supports the lower electrode 112, the emitter layer 113, and the upper electrode 114 and is composed of a glass or ceramic plate.

From the standpoint that the display 100 with a large screen is manufactured at low cost, preferably, glass is used for the substrate 111.

The type of ceramic used for the substrate 111 is not particularly limited. In view of heat resistance, chemical stability, and insulating properties, preferably, the substrate 111 is composed of a ceramic containing at least one selected from the group consisting of stabilized zirconium oxide, aluminum oxide, magnesium oxide, mullite, aluminum nitride, silicon nitride, and glass. More preferably, from the standpoint of high mechanical strength and excellent toughness, stabilized zirconium oxide is used.

Here, the term "stabilized zirconium oxide" means zirconium oxide in which the phase transition of crystals is inhibited by the addition of a stabilizing agent. This also includes partially stabilized zirconium oxide besides stabilized zirconium oxide. Examples of stabilized zirconium oxide include those containing 1 to 30 mole percent of a stabilizing agent, such as calcium oxide, magnesium oxide, yttrium oxide, scandium oxide, ytterbium oxide, cerium oxide, or an oxide of a rare-earth metal. In particular, from the standpoint of high mechanical strength, stabilized zirconium oxide containing yttrium oxide as a stabilizing agent is preferred. The content of yttrium oxide is preferably 1.5 to 6 mole percent, and more preferably 2 to 4 mole percent. Moreover, the stabilized zirconium oxide further containing 0.1 to 5 mole percent of aluminum oxide is preferred.

The crystal phase of stabilized zirconium oxide may be a mixed phase of cubic system and monoclinic system, a mixed phase of tetragonal system and monoclinic system, a mixed phase of cubic system, tetragonal system, and monoclinic system, or the like. In view of strength, toughness, and durability, preferably, the principal crystal phase is a tetragonal system or a mixed phase of tetragonal system and cubic system.

The lower electrode 112 is disposed so as to be fixed on the surface of the substrate 111. The thickness of the lower electrode 112 is preferably 20 µm or less, and more preferably 5 µm or less.

The lower electrode 112 is composed of a metallic or non-metallic electrically conductive material. As the material for the lower electrode 112, a conductor having resistance to a high-temperature oxidizing atmosphere can be preferably used. Examples of an elemental metal usable include high-melting-point noble metals, such as platinum, iridium, palladium, rhodium, and molybdenum. Examples of an alloy usable include silver-palladium, silver-platinum, platinum-palladium, and alloys containing these as major components. Furthermore, a mixture of an insulating ceramic and an elemental metal, a mixture of an insulating ceramic and an alloy, or the like (e.g., a cermet material consisting of platinum and a ceramic material) can also be used. The amount of a ceramic material that is added to the electrode material is preferably about 5% to 30% by volume. Furthermore, as the material for the lower electrode 112, a carbon-based material can also be used. Most preferably, the lower electrode 112 is composed of a material containing elemental platinum or a platinum-based alloy as a major component. From the standpoint of reducing manufacturing cost of the electron emitter 110, when a glass substrate is used as the substrate 111, preferably, elemental silver or an alloy containing silver is can be preferably used for the lower electrode 112.

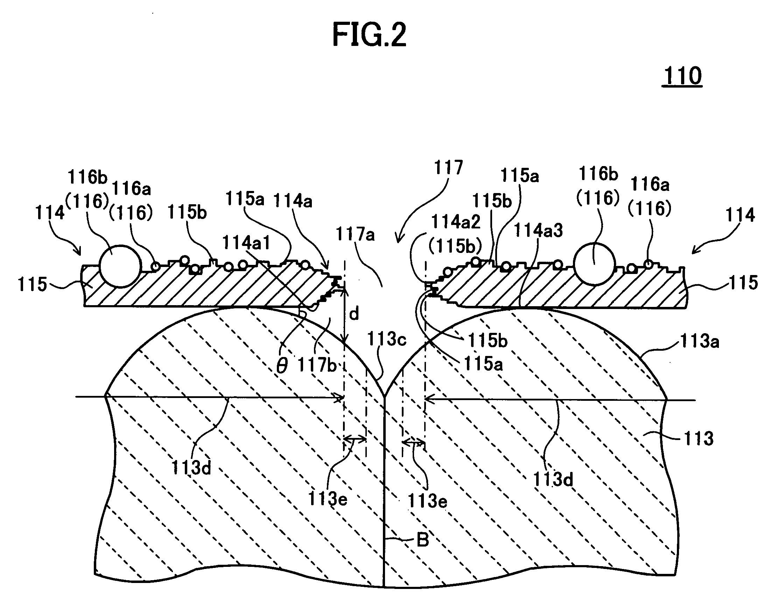

The emitter layer 113 is composed of a dielectric polycrystalline thin film. The thickness of the emitter layer 113 is preferably 1 to 300 µm, and more preferably 5 to 100 µm. Microscopic irregularities caused by grain boundaries (refer to a portion represented by symbol B in FIG. 2) and the like are formed on an upper surface 113a of the emitter layer 113. That is, many concave portions 113c are formed on the upper surface 113a of the emitter layer 113. In this embodiment, the emitter layer 113 is formed such that the upper surface 113a has a surface roughness Ra (in terms of centerline average; unit: µm) of 0.05 to 3. The emitter layer 113 is disposed on the lower electrode 112 such that a lower surface 113b thereof is fixed on the lower electrode 112.

As the material that constitutes the emitter layer 113, preferably, a dielectric material having a comparatively high relative dielectric constant (e.g., 1,000 or more) can be used. Examples of such a dielectric material include barium titanate, lead zirconate, lead magnesium niobate, lead nickel niobate, lead zinc niobate, lead manganese niobate, lead magnesium tantalate, lead nickel tantalate, lead antimony stannate, lead titanate, lead magnesium tungstenate, and lead cobalt niobate. A ceramic containing a combination of any of these dielectric materials can also be used as the material for the emitter layer 113. A ceramic whose main component contains 50% by weight or more of any of the dielectric materials can also be used as the material for the emitter layer 113. Other examples of the material for the emitter layer 113 include the dielectric materials or ceramics described above to which an oxide or another compound of lanthanum, calcium, strontium, molybdenum, tungsten, barium, niobium, zinc, nickel, manganese, or the like (these can be used in appropriate combination) is properly added.

For example, with respect to a binary nPMN-mPT material (wherein n and m represent molar ratios) including lead magnesium niobate (PMN) and lead titanate (PT), by increasing the molar ratio of PMN, the Curie point is decreased and the relative dielectric constant at room temperature is increased. Such a dielectric material can be suitably used as the material for the emitter layer 113. In particular, nPMN-mPT in which n = 0.85 to 1.0 and m = 1.0 - n is preferably used. In such a case, the relative dielectric constant is 3,000 or more. For example, nPMN-mPT in which n = 0.91 and m = 0.09 has a relative dielectric constant of 15,000 at room temperature, and nPMN-mPT in which n = 0.95 and m = 0.05 has a relative dielectric constant of 20,000 at room temperature.

With respect to a ternary PMN-PT-PZ material including lead magnesium niobate (PMN), lead titanate (PT), and lead zirconate (PZ), those having a high molar ratio of PMN and those having a composition close to a morphotropic phase boundary (MPB) between a tetragonal system and a quasi-cubic system or a tetragonal system and a rhombohedral system are preferably used as the material constituting the emitter layer 113 because of their high relative dielectric constant. For example, when PMN:PT:PZ = 0.375:0.375:0.25, the relative dielectric constant is 5,500, or when PMN:PT:PZ = 0.5:0.375:0.125, the relative dielectric constant is 4,500, which is particularly preferable.

Furthermore, a material with a higher relative dielectric constant obtained by incorporating a metal, such as platinum, into any of these dielectric materials within a range that ensures insulating properties is preferably used as the material for the emitter layer 113. In such a case, for example, preferably, about 5% to 20% by weight of platinum is incorporated into the dielectric material.

The upper electrode 114 is disposed on the upper surface 113a of the emitter layer 113. The upper electrode 114 includes graphite particles 115 and silver fine particles 116. The shape of the graphite particles 115 is, for example, preferably, flaky, plate-like, foil-like, acicular, or rod-like.

Many openings 117 are formed in the upper electrode 114. The openings 117 are formed such that the upper surface 113a of the emitter layer 113 is exposed upward. The openings 117 are formed at the positions corresponding to the concave portions 113c. Some openings 117 are formed at positions other than the positions corresponding to the concave portions 113c. Note that FIG. 1 shows a case in which openings 117 and concaves portion 113c have one-to-one correspondence. In some case, one opening 117 may correspond to a plurality of concave portions 113c, or a plurality of openings 117 may correspond to one concave portion 113c.

Floating electrodes 116' are formed in some of the concave portions 113c formed in the emitter layer 113 exposed upward by the openings 117. The floating electrodes 116' are composed of the silver fine particles 116 adhering to the upper surface 113a at the concave portions 113c.

A pulse generation source 152 is connected to the lower electrode 112 and the upper electrode 114, the pulse generation source 152 applying a drive voltage Va between the electrodes.

### (Detailed structure of electron emitter)

FIG. 2 is an enlarged cross-sectional view of a substantial part of the electron emitter 110 shown in FIG. 1.

An overhanging portion 114a is formed in the upper electrode 114 in the vicinity of the opening 117. The overhanging portion 114a is an edge of the upper electrode 114 (graphite particle 115) and faces a through-hole 117a constituting the opening 117.

A gap 117b is formed below the overhanging portion 114a. The gap 117b is formed between a lower surface 114a1 facing the upper surface 113a of the emitter layer 113 and the upper surface 113a. That is, the overhanging portion 114a horizontally extends like an overhang apart from the upper surface 113a of the emitter layer 113.

In the electron emitter 110, the emitter layer 113 and the upper electrode 114 are formed such that the maximum distance d in the thickness direction between the upper surface 113a of the emitter layer 113 and a tip 114a2 of the overhanging portion 114a satisfies the relationship 0 µm < d ≤ 10 µm.

Furthermore, in the electron emitter 110, the emitter layer 113 and the upper electrode 114 are formed so that the angle θ between the upper surface 113a of the emitter layer 113 and a lower surface 114a1 of the overhanging portion 114a in the vicinity of a triple junction 114a3 satisfies the relationship 1°≤ θ ≤ 60°. The triple junction 114a3 is a point where the emitter layer 113 (the upper surface 113a), the upper electrode 114 (the lower surface 114a1 of the overhanging portion 114a), and the reduced-pressure atmosphere outside the electron emitter 110 are in contact with each other.

Fine recesses 115a and fine protrusions 115b resulting from the fine recesses 115a are formed on the surface of the graphite particles 115 constituting the upper electrode 114. That is, the fine recesses 115a and the fine protrusions 115b correspond to microscopic concave portions, which depth is lower than the size corresponds to the surface roughness of the upper surface 113a of the emitter layer 113 (preferably, one tenth or less).

The fine recesses 115a and fine protrusions 115b are formed in large quantities in the vicinity of the opening 117. That is, the fine recesses 115a and the fine protrusions 115b are formed in large quantities on the surface of the edge of the graphite particle 115 corresponding to the overhanging portion 114a. Specifically, a plurality of fine recesses 115a and fine protrusions 115b are disposed along the thickness direction of the upper electrode 114 (vertically in FIG. 2, i.e., in the direction of electron emission) so as to face the through-hole 117a. The fine recesses 115a and the fine protrusions 115b are also disposed at the position corresponding to the lower surface 114a1 of the overhanging portion 114a. The fine recesses 115a and the fine protrusions 115b are also disposed at the position corresponding to the upper surface of the overhanging portion 114a.

Furthermore, the fine recesses 115a and the fine protrusions 115b are formed at positions other than the overhanging portion 114a on the surface of the graphite particle 115. That is, the fine recesses 115a and the fine protrusions 115b are also disposed outside the opening 117. A plurality of fine recesses 115a and fine protrusions 115b are disposed along a direction perpendicular to the thickness direction of the upper electrode 114 (horizontally in FIG. 2).

The silver fine particles 116 adhering to the surface of the graphite particle 115 include small-sized fine particles 116a and large-sized fine particles 116b. The small-sized fine particle 116a is a unit fine particle of silver or a grown particle formed by aggregation of a small number of unit fine particles. The large-sized fine particle 116b is a grown particle formed by aggregation of a large number of unit fine particles or a plurality of small-sized fine particles 116a. The small-sized fine particles 116a include fine particles having a particle size of 100 nm or less, and the large-sized fine particles 116b include fine particles having a particle size of 600 nm or more, and both coexist with each other. Furthermore, in the particle size distribution, in each of a range of 300 nm or less and a range of more than 300 nm, the silver fine particles 116 have at least one peak. That is, the average particle size of the small-sized fine particles 116a is 300 nm or less, and the average particle size of the large-sized fine particles 116b is more than 300 nm. In this embodiment, an example of the fine particles is shown in which fine particles having a particle size of 100 nm or less and fine particles having a particle size of 600 nm or more coexist with each other and in each of a range of 300 nm or less and a range of more than 300 nm, the fine particles have at least one peak. However, fine particles satisfying one of the above two conditions can produce the effect of the present invention.

In the electron emitter 110 according to this embodiment, the tip 114a2 of the upper electrode 114, the triple junction 114a3, the fine recesses 115a, the fine protrusions 115b, and silver fine particles 116 (small-sized fine particles 116a and large-sized fine particles 116b) each constitute an electric field concentration portion. The term "electric field concentration portion" means a portion in which lines of electric force concentrate (i.e., an electric field concentrates) when a drive voltage is applied between the upper electrode 114 and the lower electrode 112 (refer to FIG. 1). The term "concentration of lines of electric force" is defined by a portion in which lines of electric force generated at regular intervals from the lower electrode 112 concentrate when lines of electric force are drawn supposing the lower electrode 112 (refer to FIG. 1), the emitter layer 113, and the upper electrode 114 are plates of infinite length in side view. The state of the concentration of lines of electric force (electric field concentration) at the electric field concentration portion can be easily confirmed by simulation by numerical analysis using a finite element method.

The electric field concentration portion as described above is also formed on the outer peripheral portion of the upper electrode 114 (i.e., the peripheral portion defining the outer shape of the upper electrode 114 in plan view) other than the opening 117.

The through-hole 117a surrounded by the inner edge of the opening 117 can have any of various shapes, such as circular, elliptical, polygonal, and irregular, in plan view.

For the reason described below, the through-hole 117a is formed such that, when the shape of the through-hole 117a is approximated to a circle having the same area as that of the through-hole 117a in plan view, the average diameter of the circle is 10 nm to 20 µm.

That is, as shown in FIG. 2, in the emitter layer 113, the portion in which polarization is reversed or changed in response to the drive voltage (Va in FIG. 1) applied between the upper electrode 114 and the lower electrode 112 (refer to FIG. 1) includes a first portion 113d and a second portion 113e. The first portion 113d is disposed beneath the upper electrode 114 (graphite particle 115). The second portion 113e is disposed in a region extending from beneath the inner edge of the through-hole 117a (the tip 114a2 of the upper electrode 114) toward the inside the through-hole 117a. The second portion 113e is a main region which accumulates electrons supplied from the upper electrode 114 (the electric field concentration portion) and contributes to emission of electrons. The range of occurrence of the second portion 113e changes depending on the level of the drive voltage Va and the degree of electric field concentration thereof.

If the average size of the through-hole 117a is excessively small, the area of the second portion 113e decreases, resulting in a decrease in the amount of electron emission. Therefore, the average size of the through-hole 117a is set at 10 nm or more. Conversely, if the average size of the through-hole 117a is excessively large, a region of the upper surface 113a of the emitter layer 113 in which the second portion 113e is not disposed (which does not contribute accumulation and emission) increases within the opening 117, resulting in a decrease in electron emission efficiency. Therefore, the average size of the through-hole 117a is set at 20 µm or less in this embodiment. As described above, in order to increase the amount of electrons accumulated on and emitted from the upper surface 113a of the emitter layer 113 in the vicinity of the opening 117 and to efficiently emit electrons, the average size of the through-hole 117a is set in the range of 10 nm to 20 µm in this embodiment.

### (Equivalent circuit configuration of electron emitter)

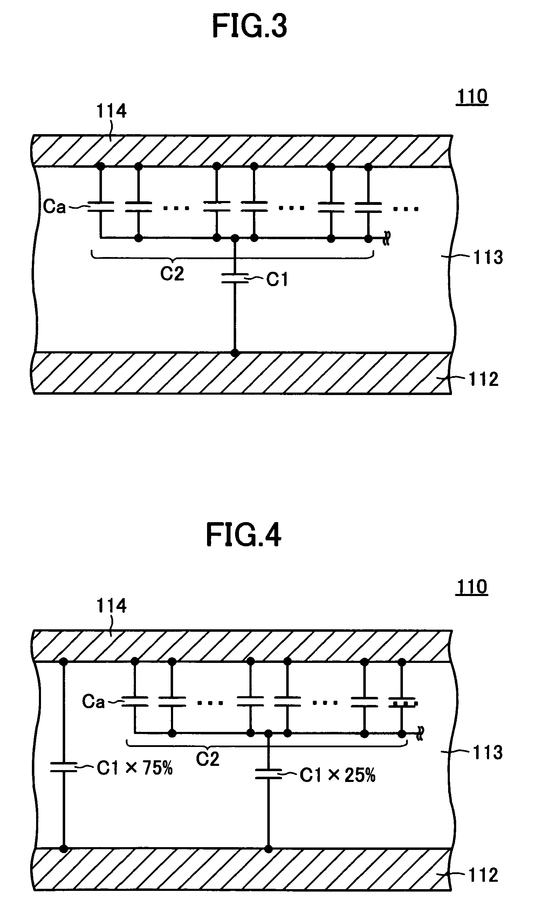

As shown in FIG. 3, the electron emitter 110 according to this embodiment can have electric characteristics close to those of a configuration in which a capacitor C1 formed by the emitter layer 113 and a capacitor C2 composed of a group of capacitors Ca formed by the individual gaps 117b are connected in series. In the capacitor C2, a plurality of capacitors Ca formed by the individual gaps 117b (refer to FIG. 2) are connected in parallel.

However, the equivalent circuit in which the capacitor C2 composed of the group of capacitors Ca and the capacitor C1 formed by the emitter layer 113 are simply connected in series is not practical. That is, the equivalent circuit can be configured such that, in the upper electrode 114 shown in FIGS. 1 and 2, depending on the number and state of the openings 117, a portion of the capacitor C1 formed by the emitter layer 113 is connected in series to the capacitor C2 formed by the group of capacitors Ca.

Here, for example, as shown in FIG. 4, assuming the case in which 25% of the capacitor C1 formed by the emitter layer 113 is connected in series to the capacitor C2 formed by the group of capacitors Ca, the capacitance is calculated below.

Since the gap 117b is substantially in a vacuum state, the relative dielectric constant is assumed to be 1. It is assumed that the maximum distance d of the gap 117b be 0.1 µm, the area S of one gap 117b be 1 µm x 1 µm, and the number of gaps 117b be 10,000. It is assumed that the relative dielectric constant of the emitter layer 113 be 2,000, the thickness of the emitter layer 113 be 20 µm, and the opposing area between the upper electrode 114 and the lower electrode 112 be 200 µm x 200 µm.

Under such assumption, the capacitance of the capacitor C2 by the group of capacitors Ca is 0.885 pF, and the capacitance of the capacitor C1 by the emitter layer 113 is 35.4 pF. When 25% of the capacitor C1 formed by the emitter layer 113 is assumed to be connected in series to the capacitor C2 by the group of capacitors Ca, the capacitance of the portion in which series connection is formed (including the capacitance of the capacitor C2 by the group) is 0.805 pF, and the remaining capacitance is 26.6 pF.

The portion of the capacitor C1 formed by the emitter layer 113 other than the portion which is connected in series to the capacitor C2 by the group of capacitors Ca is connected in parallel to the portion connected in series. Therefore, the resultant capacitance of the whole between the upper electrode 114 and the lower electrode 112 is 27.5 pF. The resulting capacitance is 78% of the capacitance 35.4 pF of the capacitor C1 formed by the emitter layer 113. In other words, the resulting capacitance of the whole is lower than the capacitance of the capacitor C1 formed by the emitter layer 113.

Thus, the capacitance of the capacitor Ca formed by the gap 117b and the resulting capacitance C2 of the group of gaps 117b are significantly lower than the capacitance of the capacitor C1 by the emitter layer 113 which is connected in series. That is, the electron emitter 110 is designed such that, when the drive voltage Va is applied to the series circuit of the capacitors Ca (C2) and the capacitor C1, most of the divided voltage is applied to the capacitors Ca (C2) having lower capacitance. In other words, the electron emitter 110 is designed such that most of the drive voltage Va is applied to the gaps 117b (refer to FIG. 2).

### (Principle of electron emission operation of electron emitter)

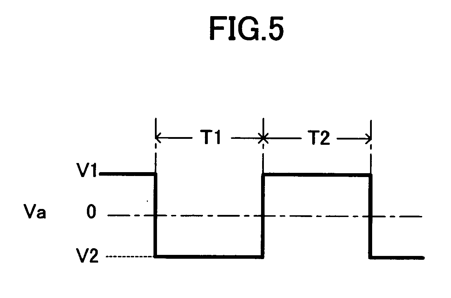

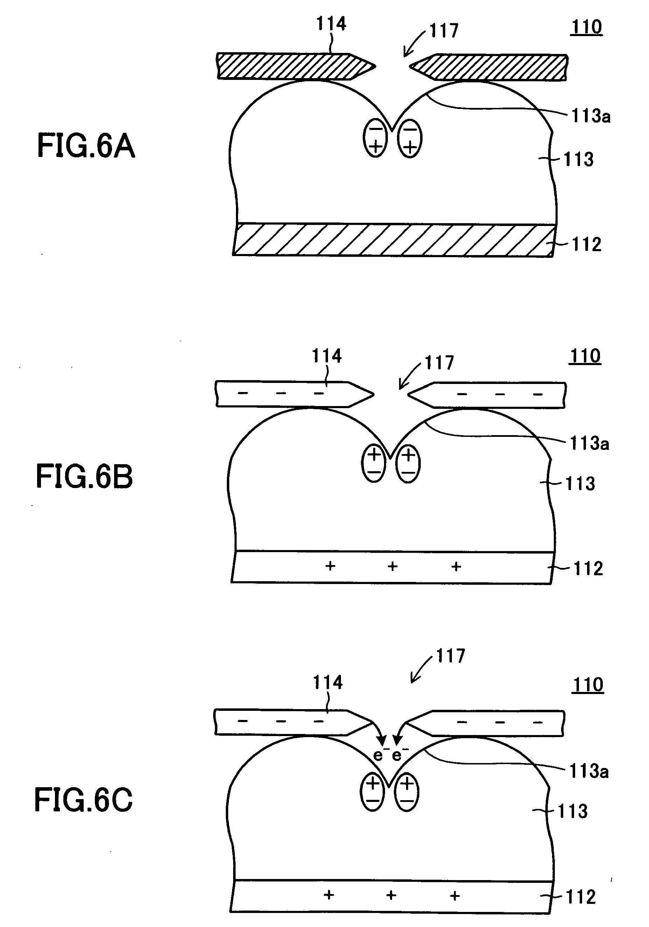

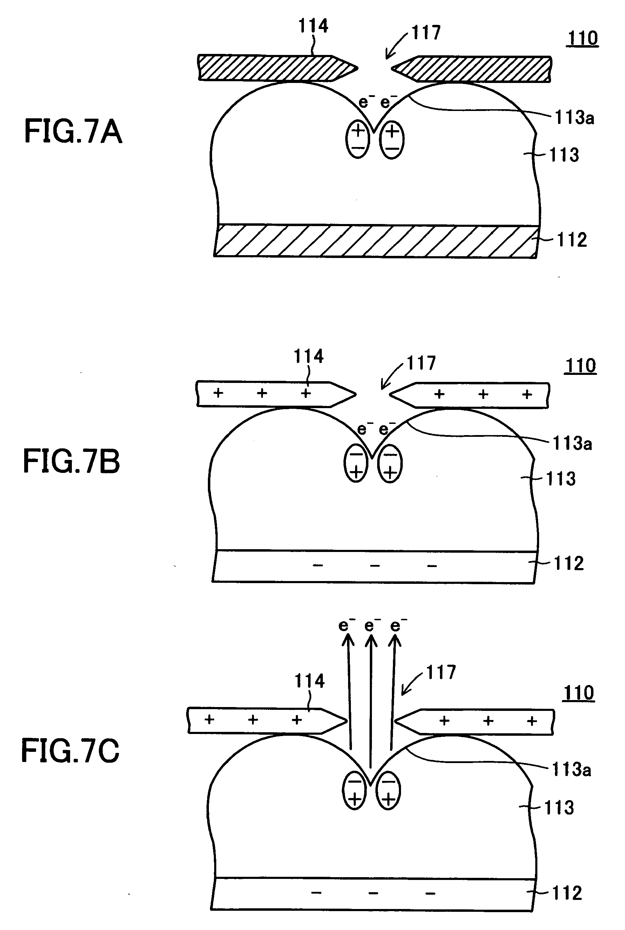

The principle of electron emission operation of the electron emitter 110 will now be described with reference to FIGS. 5, 6A to 6C, and 7A to 7C. FIG. 5 is a chart showing a waveform of a drive voltage Va. FIGS. 6A to 6C and 7A to 7C are schematic diagrams used for describing the operation of the electron emitter 110.

In this embodiment, as the drive voltage Va applied between the upper electrode 114 and the lower electrode 112, as shown in FIG. 5, an alternating voltage having a rectangular wave with a reference voltage (i.e., voltage corresponding to the center of the wave) of 0 [V], an amplitude (V1 + V2) [V], and a period (T1 + T2) [s] is used. In the drive voltage Va, during time T1 as the first stage, a negative voltage V2 is applied in which the potential of the upper electrode 114 is lower than that of the lower electrode 112. Subsequently, during time T2 as the second stage, a positive voltage V1 is applied in which the potential of the upper electrode 114 is higher than that of the lower electrode 112.

Assuming a case in which the polarization direction of the emitter layer 113 is aligned in one direction in an initial state, (specifically, as shown in FIG. 6A, a case in which the negative poles of the dipoles are directed toward the upper surface 113a of the emitter layer 113), the operation will be described below.

First, in the initial state in which the voltage between the upper electrode 114 and the lower electrode 112 is the reference voltage, as shown in FIG. 6A, negative poles of dipoles are directed toward the upper surface 113a of the emitter layer 113. Consequently, electrons are not substantially accumulated on the upper surface 113a of the emitter layer 113.

Subsequently, when the negative voltage V2 is applied, as shown in FIG. 6B, polarization reversal occurs. Because of the polarization reversal, electric field concentration occurs at the tip 114a2 and the triple junction 114a3 which are electric field concentration portions. As a result, electrons are emitted (supplied) from the electric field concentration portions in the upper electrode 114 toward the upper surface 113a of the emitter layer 113. For example, as shown in FIG. 6C, electrons are accumulated on such portions of the upper surface 113a as exposed to the opening 117 and/or in the vicinity of the overhanging portion 114a. That is, the upper surface 113a is charged. The upper surface 113a can be charged until a certain saturation state is achieved on the basis of the surface resistance of the emitter layer 113, and the amount of charging can be controlled by the drive voltage waveform or the like. As described above, the upper electrode 114 (in particular, the electric field concentration portions) functions as an electron supply source for the emitter layer 113 (the upper surface 113a).

Subsequently, as shown in FIG. 7A, the drive voltage Va changes from the negative voltage V2 to the reference voltage, and then, when the positive voltage V1 is applied as the drive voltage Va, polarization reversal occurs again (refer to FIG. 7B). As a result, the electrons accumulated on the upper surface 113a are emitted toward outside through the through-hole 117a due to electrostatic repulsion from the negative poles of the dipoles (refer to FIG. 7C).

The similar operation of electron emission also takes place in the outer peripheral portion of the upper electrode 114 where the opening 117 is not disposed.

### (Method for manufacturing electron emitter)

A method for manufacturing an electron emitter 110 (refer to FIG. 1, etc.) having the above-mentioned structure according to this embodiment will be described below using reference numerals of the constituent elements in FIGS. 1 and 2.

First, a lower electrode 112 is formed on a substrate 111 so as to be fixed on and integrated with the substrate 111 (lower electrode formation step). In the lower electrode formation step, a thin-film formation process, such as vapor deposition, can be used. Alternatively, a thick-film formation process, such as printing or coating, can be used.

Subsequently, a dielectric layer is formed on the lower electrode 112, and thereby an emitter layer 113 is formed (emitter layer formation step). In the emitter layer formation step, for example, screen printing, dipping, coating, electrophoresis, aerosol deposition, sol impregnation, an ion-beam method, sputtering, vacuum evaporation, ion plating, chemical vapor deposition (CVD), or plating can be used.

Furthermore, an upper electrode 114 is formed on the resulting emitter layer 113 (upper electrode formation step). Thereby, the electron emitter 110 according to this embodiment is manufactured. The upper electrode formation step is carried out as follows:

First, graphite particles and silver fine particles are dispersed in a predetermined binder composed of a synthetic resin to prepare an electrode forming paste (electrode forming paste preparation step). The graphite particles, the silver fine particles, and the binder can be mixed with an agitator, a roll mill, Nanomizer (registered trademark), or the like. The graphite particles and the silver fine particles may be simultaneously added to and mixed in the binder. Alternatively, silver fine powder, an ink in which silver nanoparticles are dispersed, or an organometallic compound of silver may be added to and mixed in a graphite paste prepared by mixing graphite particles and a binder, and thus silver fine particles are dispersed in the graphite paste.

A binder having a relatively low decomposition temperature is preferably used. For example, a material whose decomposition temperature is preferably 50°C or more, and more preferably 100°C or more, lower than the temperature at which graphite particles are partially decomposed and/or eroded away due to oxidation by the catalytic action of the silver fine particles (graphite decomposition temperature: about 450°C) is suitably used as the binder. The term "decomposition temperature" means a temperature corresponding to the peak on the lowest temperature side in a differential thermal analysis curve.

Specifically, an EMA copolymer, i-butyl methacrylate (iBMA), butyl methacrylate (BMA), methyl methacrylate (MMA), or methyl methacrylate/ethyl acrylate (MMA/EA) can be used as the binder. In such a case, a material having a weight-average molecular weight (Mw) of about 50,000 to 150,000 is preferably used.

The mixing ratio (by weight) of the graphite particles to the binder can be set to be in a range of 1:5 to 5:1. The mixing ratio (by weight) of the graphite particles to the silver fine particles can be set to be in a range of 100:1 to 1:1.

Subsequently, a layer of the electrode forming paste is formed on the emitter layer 113 (electrode paste layer formation step). In the electrode paste layer formation step, for example, screen printing, dipping, or coating can be used.

After the layer of the electrode forming paste is formed, predetermined heat treatment is performed (heat treatment step). The binder is decomposed or vaporized in the heat treatment step. Furthermore, the graphite particles are eroded away by the catalytic action of the silver fine particles in the heat treatment step.

By carrying out the heat treatment step, the upper electrode 114 composed of graphite particles provided with fine recesses 115a, fine protrusions 115b, and silver fine particles 116 on the surfaces is formed on the upper surface 113a of the emitter layer 113.

Here, the heat treatment step may be carried out in two stages, i.e., a first heat treatment step and a second heat treatment step, at different treatment temperatures.

The first heat treatment step is a step for removing the binder from the layer of the electrode forming paste. The temperature in the first heat treatment step (first heat treatment temperature) can be set at a temperature (e.g. about 400°C) that is higher than the binder thermal decomposition initiation temperature and lower than the graphite decomposition temperature. As the first heat treatment temperature, a temperature that does not promote the growth of silver fine particles can be selected.

The second heat treatment step is a step for forming the fine recesses 115a, the fine protrusions 115b, and the through-holes 117a in the graphite particles 115 by subjecting the layer of the electrode forming paste in which (most of) the binder has been decomposed or vaporized in the first heat treatment step to heat treatment at a temperature higher than the first heat treatment temperature so that decomposition and/or erosion of the graphite due to the silver fine particles are promoted.

### EXAMPLE 1

A specific example (Example 1) of a method for manufacturing the electron emitter 110 (refer to FIG. 1, etc.) having the structure described above according to this embodiment will be described below.

### (Lower electrode formation step)

On a substrate 111 composed of zirconium oxide (ZrO₂) stabilized by yttrium oxide (Y₂O₃), a layer of a metal paste containing metallic platinum (Pt) is formed by screen printing with a predetermined size and shape. By heat-treating the metal paste layer at a predetermined temperature in the range from about 1,000°C to about 1,400°C, a lower electrode 112 composed of metallic platinum (Pt) with a thickness of 3 µm is formed so as to be fixed on and integrated with the substrate 111.

### (Emitter layer formation step)

First, oxides of lead (Pb), magnesium (Mg), zirconium (Zr), titanium (Ti), nickel (Ni), etc. (e.g., lead monoxide (PbO), trilead tetraoxide (Pb₃O₄), magnesium oxide (MgO), zirconium oxide (ZrO₂), titanium oxide (TiO₂), nickel oxide (NiO), etc.) are mixed such that the contents of the individual elements satisfy the desired ratio. Subsequently, the resulting mixture is calcined at a predetermined temperature in the range from about 750°C to about 1,300°C, and thereby the dielectric material described above is obtained. With respect to the dielectric material obtained by the calcination, when the diffraction intensity is measured by an X-ray diffractometer, the ratio of the intensity of the strongest diffraction line of the heterogenous phase, such as a pyrochlore phase, to that of the perovskite phase is preferably 5% or less, and more preferably 2% or less. Finally, the resulting dielectric material after calcination is pulverized using a ball mill or the like, and thereby dielectric powder having a predetermined particle size (e.g., 0.1 to 1 µm in terms of average particle size, as measured by a laser diffraction method) is obtained.

The dielectric powder thus obtained is dispersed in a mixed solution of a predetermined binder and a solvent to prepare a dielectric paste.

Subsequently, a layer of the dielectric paste is formed on the lower electrode 112 by screen printing so as to achieve a coating thickness of 40 µm.

The dielectric paste layer is dried to vaporize the solvent, and then is heat-treated to decompose or vaporize the binder and to densify the dielectric layer. The emitter layer 113 is thereby formed.

### (Upper electrode formation)

An upper electrode 114 is formed on the emitter layer 113 using the process described below.

### Electrode paste preparation step

First, graphite powder (average particle size: 10 µm, thickness: 1 µm or less), an acrylic binder (EMA copolymer; weight-average molecular weight (Mw): 105,000), a solvent (terpineol), and a carboxylate-ester-series dispersant (amine value: about 70) are mixed with a tri-roll mill (i.e., roll mill composed of three rolls) at a mixing ratio by weight of 20:25:75:4, and thereby a paste (graphite paste) in which graphite is dispersed is obtained. Subsequently, an ink in which silver nanoparticles are dispersed (average particle size of silver particles: 10 nm) is added to the graphite paste such that the weight ratio of graphite to silver is 2:1, and mixing is performed with the tri-roll mill to prepare an electrode forming paste.

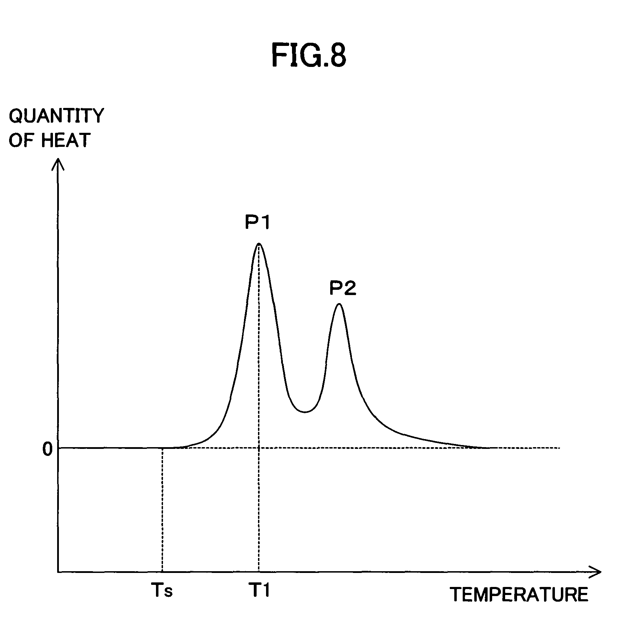

The thermal decomposition peak temperature of the acrylic binder is 280°C that is more than 100°C lower than the heat treatment temperature (about 450°C) for decomposition (oxidation) and erosion of the graphite due to the catalytic effect of silver (hereinafter, simply referred to as the "graphite decomposition temperature"). Here, the thermal decomposition peak temperature is a temperature (T1) corresponding to an apex of a first peak P1 (on the lowest temperature side) out of peaks P1, P2... in a differential thermal analysis curve shown in FIG. 8. Note that the thermal decomposition initiation temperature Ts shown in FIG. 8 is the temperature at the rising edge of the first peak P1.

FIG. 8 shows an example of a typical profile that can be obtained in differential thermal analysis, and actual profiles in differential thermal analysis may be different from the profile shown in FIG. 8. For example, only one peak may appear. In such a case, the thermal decomposition peak temperature T1 and the thermal decomposition initiation temperature Ts are determined in relation to the single peak. Furthermore, in a plurality of peaks, the height of the peak P2 or the other peak may be higher than the peak P1 on the lowest temperature side. Even in such a case, the thermal decomposition peak temperature T1 and the thermal decomposition initiation temperature Ts are determined in relation to the peak P1 on the lowest temperature side.

### Electrode paste layer formation step

The resulting electrode forming paste is diluted with terpineol to adjust the viscosity to about 100,000 to 200,000 cps. The diluted electrode forming paste is applied by screen printing onto the emitter layer 113 at a thickness of about 1 to 20 µm. Thereby, a layer of the electrode forming paste is formed on the emitter layer 113.

### Heat treatment step

The workpiece provided with the layer of the electrode forming paste as described above is subjected to a drying step to vaporize the solvent, and then is subjected to heat treatment in a heating oven in an air atmosphere (atmospheric pressure). The heat treatment is performed as follows: First, the temperature is raised to 450°C over 15 minutes and kept at 450°C for 30 minutes. Then, the workpiece is slow-cooled over 15 minutes in the oven.

### (Evaluation of electron emitter according to Example 1)

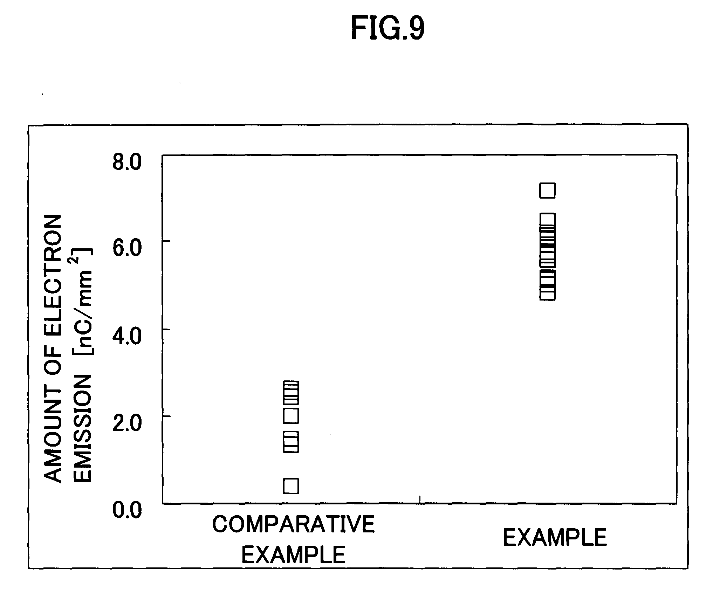

FIG. 9 is a graph showing the amount of electron emission per unit area with respect to the electron emitter 110 manufactured by the method according to Example 1. As Comparative Example, a case in which a binder that is different from that in Example 1 is used is also shown. As the binder in Comparative Example, an ethyl cellulose-series binder (ethoxy group content: 48% to 50%; Mw = 75,000) is used.

As shown in FIG. 9, in the electron emitter 110 of Example 1, the amount of electron emission is significantly larger than that in Comparative Example.

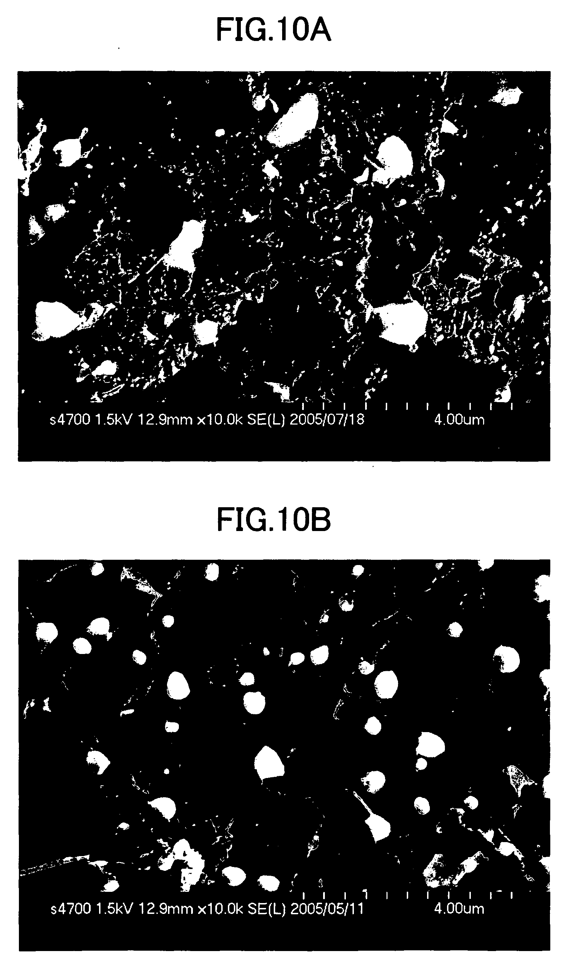

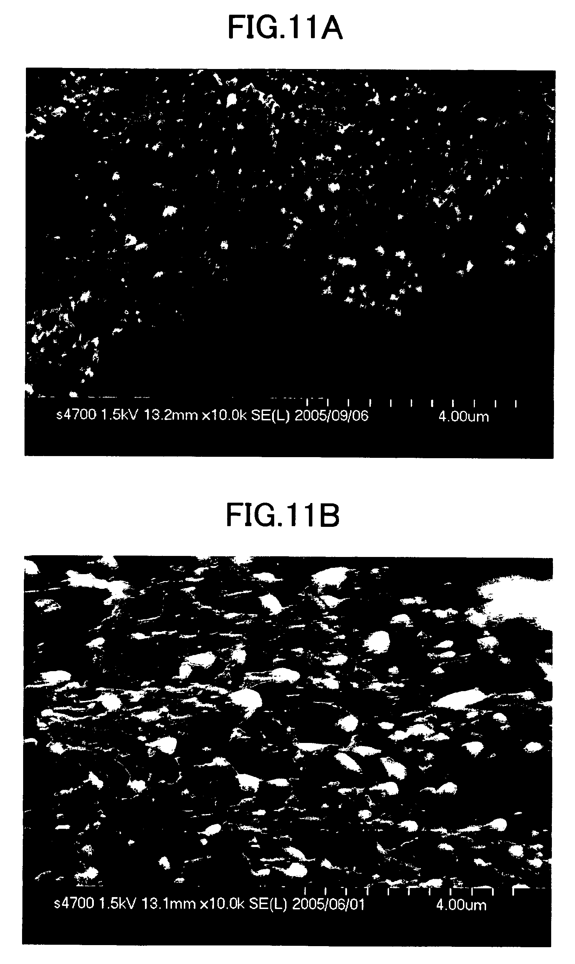

FIG. 10A is a scanning electron micrograph of the electron emitter 110 (upper electrode 114) of Example 1, taken from above. FIG. 10B is a scanning electron micrograph of the electron emitter (upper electrode) of Comparative Example corresponding to FIG. 10A. FIG. 11A is a scanning electron micrograph of the electron emitter 110 (upper electrode 114) of Example 1, taken from oblique above. FIG. 11 B is a scanning electron micrograph of the electron emitter (upper electrode) of Comparative Example corresponding to FIG. 11A.

As is evident from FIGS. 10A, 10B, 11A, and 11 B, in Comparative Example, the surface of the graphite particle is planer. In contrast, in Example 1, many submicron fine recesses (fine recesses 115a in FIG. 2) and holes are formed in the surface of the graphite particle. As shown in FIGS. 10A and 11A, the recesses are formed such that the depth at the deepest part is 10 nm or more and is 50% or less of the thickness of the graphite particle.

Furthermore, in Example 1, many sharp protrusions (fine protrusions 115b in FIG. 2) are formed at the edge of the graphite particle (overhanging portion 114a in FIG. 2). A plurality of protrusions are disposed along the thickness direction of the graphite particle. As shown in FIGS. 10A and 11A, the protrusions are formed such that the height is 7 nm (the size of the primary particle of silver fine particle) or more, and is 50% or less of the thickness of the graphite particle.

Furthermore, the silver fine particles of Comparative Example are coarsened on a relatively medium scale (about 0.3 to 0.5 µm) and the particle size distribution is relatively uniform. In contrast, in Example 1, many large-sized fine particles which are very largely grown (500 nm or more in terms of average particle size) and many small-sized fine particles which are much smaller than the large-sized fine particles (100 nm or less in terms of average particle size) coexist each other.

As shown in FIG. 10A, relatively large holes corresponding to the large-sized fine particles are formed such that the depth at the deepest part is 10 nm or more and is 90% or less of the thickness of the graphite particle and protrusions are formed on the outer peripheral portions of the holes. A through-hole corresponding to the large-sized fine particle is also formed, the through-hole constituting the opening 117 in FIG. 2.

### EXAMPLE 2

Another specific example (Example 2) of a method for manufacturing the electron emitter 110 (refer to FIG. 1, etc.) according to this embodiment will be described below.

In this example, the same ethyl cellulose (thermal decomposition initiation temperature Ts = 300°C; thermal decomposition peak temperature T1 = 380°C) as that in Comparative Example described above is used, but the heat treatment step is divided into two stages, i.e., first heat treatment step and second heat treatment step.

### (EXAMPLE 2-1)

In the first heat treatment step, the temperature is raised to 300°C over 15 minutes and kept at 300°C for 5 hours. Subsequently, in the second heat treatment step, the temperature is kept at 400°C for 2 hours, and then the workpiece is slow-cooled over 15 minutes in the oven.

### (EXAMPLE 2-2)

In the first heat treatment step, the temperature is raised to 350°C over 15 minutes and kept at 350°C for 2 hours. Subsequently, in the second heat treatment step, the temperature is kept at 400°C for 2 hours, and then the workpiece is slow-cooled over 15 minutes in the oven.

In the electron emitter 110 in each of Examples 2-1 and 2-2, a significant improvement was observed in the amount of electron emission as in Example 1.

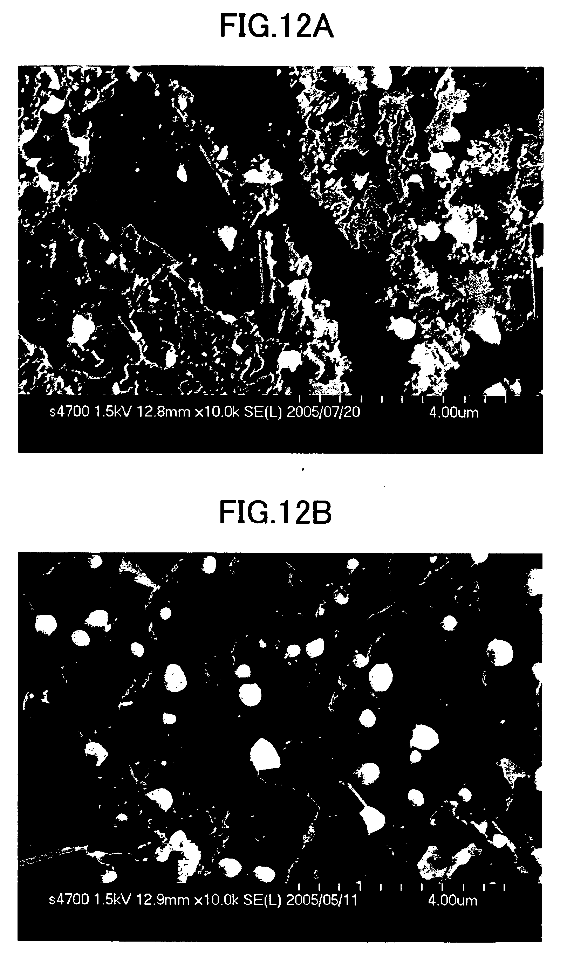

FIG. 12A is a scanning electron micrograph of the electron emitter 110 (upper electrode 114) of Example 2, taken from above. FIG. 12B is a scanning electron micrograph of the electron emitter (upper electrode) of Comparative Example corresponding to FIG. 10A.

As is evident from FIG. 12A, in Example 2, as in Example 1, fine recesses are formed on the surface of the graphite particle, and many sharp protrusions are formed at the edge of the graphite particle. In Example 2, as in Example 1, as silver fine particles, large-sized fine particles which are very largely grown and small-sized fine particles which are much smaller than the large-sized fine particles coexist each other.

### (Summary of Examples)

In Example 1, the heat treatment step was a single step (one-stage heat treatment step), but a binder that was decomposed or vaporized at a relatively low temperature (100°C or more lower than the graphite decomposition temperature) was used. On the other hand, in Example 2, the same binder as the conventionally used binder was used, but the heat treatment step was divided into two stages (two-stage heat treatment step).

As described above, in each of Example 1 and Example 2, the amount of electron emission was significantly increased. Furthermore, in each of Example 1 and Example 2, the upper electrode 114 had the same shape features.

This is believed to have been caused by the following mechanism.

Since the binder is decomposed or vaporized at a temperature that is lower than the temperature (hereinafter referred to as the "predetermined graphite decomposition temperature") at which graphite is decomposed and/or eroded away in the presence of silver fine particles which function as a catalyst for oxidizing and decomposing graphite and that is lower than the temperature at which growth of silver fine particles occurs, silver fine particles can be present in a state of small-sized fine particles on the surface of the graphite.

As the temperature increases, due to the catalytic action of silver, the graphite (graphite particles 115) constituting the upper electrode 114 becomes eroded. Simultaneously with the erosion of the graphite, growth of silver fine particles is likely to occur. However, due to erosion of the graphite, silver fine particles are embedded into concave portions formed by the erosion of the graphite. Consequently, silver fine particles are inhibited from moving, and growth of the silver fine particles is inhibited.

Since the graphite is eroded on a small scale by the small-sized silver fine particles (small-sized fine particles 116a in FIG. 2), many recesses and protrusions are formed on the surface of the graphite.

In Example 1, as descried above, the binder in which the binder thermal decomposition peak temperature is relatively low (100°C or more lower than the graphite decomposition temperature) is used. In such a case, even if the heat treatment step is not divided into two stages, the binder is relatively rapidly decomposed or vaporized at a relatively low temperature with the silver fine particles being not coarsened. Consequently, small-sized silver fine particles adhere to the surface of the graphite in a state in which most of the binder is decomposed or vaporized. The microscopic recesses and protrusions can be satisfactorily formed by the small-sized silver fine particles. Thus, in the manufacturing method of Example 1, the characteristic shapes described above can be formed using an extremely simple heat treatment step.

On the other hand, in Example 2, the binder in which the binder thermal decomposition temperature is higher than that in Example 1 is used. Even in such a case, by carrying out the two-stage heat treatment step, the microscopic recesses and protrusions can be satisfactorily formed. In this case, the binder thermal decomposition initiation temperature must be lower than the graphite decomposition temperature. Thereby, in the first heat treatment step which is carried out at a temperature lower than that in the second heat treatment step, most of the binder is decomposed or vaporized with the silver fine particles not being coarsened.

Furthermore, the large-sized silver particles confirmed in FIGS. 10A, 11A, and 12A (i.e., large-sized fine particles 116b in FIG. 2) are believed to be formed by aggregation of some of the silver fine particles in the paste drying step and the binder decomposition/vaporization step, followed by growth of the particles. The openings 117 and large concave portions and recesses are formed in the graphite particle 115 by the large-sized silver particles.

By appropriately controlling the preparation conditions for the electrode forming paste so that both the small-sized silver fine particles and the large-sized silver particles are present at the temperature lower than the predetermined graphite decomposition temperature and the temperature at which growth of silver fine particles occurs, it is believed that the characteristic shapes described above can be easily formed.

### (Suggestion of modification examples)

The embodiment and examples described above are merely a typical embodiment and examples which the applicant considers best at the time of filing of this application. Therefore, the present invention is not limited to the embodiment, etc. described above, and it is, of course, possible to make various modifications without departing from the substantial idea of the present invention.

Several modification examples will be described below to the extent that can be included (so far as time permits) in the filing of this application under the first-to-file rule. However, it is, of course, to be understood that the present invention is not limited to such modification examples. It unduly impairs the benefits of the applicant who expedites the filing of the application under the first-to-file rule but unduly benefits imitators to restrictively interpret the present invention on the basis of the descriptions in the embodiment, etc. described above and the modification examples described below (in particular, to restrictively interpret the elements constituting the means for achieving the object of the present invention, the elements being described in terms of operation and function, on the basis of descriptions in the embodiment, etc). Such action violates the patent law of which purpose is protection and utilization of inventions and is not allowed.
(i) The structure of the electron emitter according to the present invention is not limited to the structure of the electron emitter 110 in the embodiment described above. For example, the upper electrode 114 may be formed on a certain coating layer formed on the upper surface 113a of the emitter layer 113. Alternatively, instead of the lower electrode 112, a second electrode may be disposed on the upper surface 113a of the emitter layer 113.
   Furthermore, a multilayer structure may be employed, in which a plurality of laminates each including an upper electrode 114, an emitter layer 113, and a lower electrode 112 disposed in that order from the top are stacked.
(ii) As the method for preparing the dielectric material constituting the emitter layer 113, various methods other than the method described above in the examples can be used. For example, an alkoxide method, a coprecipitation method, or the like can be used.
(iii) Addition of silver fine particles to the electrode forming paste is not limited to the addition of an organometallic compound of silver or an ink in which silver nanoparticles are dispersed. For example, silver powder itself may be added to the electrode forming paste. In such a case, pre-treatment in which silver powder is pulverized or disintegrated to 0.5 µm or less may often be required. A silver paste in which silver powder is dispersed in a binder can also be used. In such a case, by appropriately selecting the binder, solvent, dispersant for each of the graphite paste and the silver paste, the dispersion state of silver fine particles can be appropriately adjusted.
(iv) Instead of silver fine particles, other fine particles capable of decomposing and eroding graphite under heating can be used. For example, fine particles composed of an alloy containing silver can be suitably used. Alternatively, fine particles composed of platinum, gold, copper, or an alloy thereof can be used. Furthermore, fine particles composed of an oxide of bismuth (Bi), vanadium (V), antimony (Sb), or molybdenum (Mo) can also be used. From the standpoint of increasing the number of electric field concentration portions, use of electrically conductive fine particles is preferred. The reason for this is that not only the recesses and protrusions are formed by the fine particles but also the fine particles themselves can be electric field concentration portions.
(v) The binder with low decomposition temperature in Example 1 and the two-stage heat treatment step in Example 2 can be combined.
(vi) The degree of dilution of the electrode forming paste and the coating thickness in screen printing can be adjusted appropriately depending on the viscosity of the electrode forming paste. For example, when the viscosity of the electrode forming paste before dilution is low, screen printing can be performed without dilution. When the viscosity of the paste is low in screen printing, the coating thickness is increased.
(vii) When the heat treatment step is carried out in a reduced-pressure atmosphere, in a vacuum, or in an inert gas (including nitrogen) atmosphere, the thickness of the layer of the electrode forming paste formed in the electrode paste layer formation step can be decreased.
(viii) In the elements constituting the means for achieving the object of the present invention, the elements which are described in terms of operation and function include any structure that can achieve the operation and function in addition to the specific structure disclosed in the above-mentioned embodiment, examples, and modification examples.

## Claims

1. An electron emitter comprising:
an emitter layer composed of a dielectric material;
a first electrode disposed onto a first surface of the emitter layer; and
a second electrode disposed onto the first surface, inside, or onto a second surface opposite to the first surface of the emitter layer,
wherein a microscopic recess is disposed on a surface of the first electrode.

2. The electron emitter according to Claim 1, wherein a gap is disposed between an edge of the first electrode and the first surface of the emitter layer.

3. The electron emitter according to Claim 1 or 2, wherein an opening is disposed in the first electrode, the opening exposing the first surface of the emitter layer to the outside of the electron emitter.

4. The electron emitter according to Claim 3, wherein the recess is disposed at the opening and/or in the vicinity thereof.

5. The electron emitter according to any one of Claims 1 to 4,
wherein the first electrode is composed of graphite.

6. The electron emitter according to any one of Claims 1 to 5, further comprising electrically conductive fine particles adhering to the surface of the first electrode.

7. The electron emitter according to Claim 6, wherein the fine particles are composed of silver or an alloy containing silver.

8. The electron emitter according to Claim 6 or 7, wherein the fine particles comprise small-sized fine particles and large-sized fine particles having a larger particle size than that of the small-sized fine particles.

9. The electron emitter according to Claim 8, wherein the small-sized fine particles include fine particles having a particle size of 100 nm or less, and the large-sized fine particles include fine particles having a particle size of 600 nm or more.

10. An electron emitter comprising:
an emitter layer composed of a dielectric material;
a first electrode disposed onto a first surface of the emitter layer; and
a second electrode disposed onto the first surface, inside, or onto a second surface opposite to the first surface of the emitter layer,
wherein an opening is disposed in the first electrode, the opening exposing the first surface of the emitter layer to the outside of the electron emitter; and
a plurality of microscopic protrusions are formed at an inner edge of the opening so as to be disposed along the thickness direction of the first electrode.

11. The electron emitter according to Claim 10, wherein the protrusions are further disposed in the area which is outside as well as vicinity of the opening.

12. The electron emitter according to Claim 10 or 11, wherein a gap is disposed between the edge of the opening and the first surface of the emitter layer.

13. The electron emitter according to any one of Claims 10 to 12, wherein the first electrode is composed of graphite.

14. The electron emitter according to any one of Claims 10 to 13, further comprising electrically conductive fine particles adhering to the surface of the first electrode.

15. The electron emitter according to Claim 14, wherein the fine particles are composed of silver or an alloy containing silver.

16. The electron emitter according to Claim 14 or 15, wherein the fine particles comprise small-sized fine particles and large-sized fine particles having a larger particle size than that of the small-sized fine particles.

17. The electron emitter according to Claim 16, wherein the small-sized fine particles include fine particles having a particle size of 100 nm or less, and the large-sized fine particles include fine particles having a particle size of 600 nm or more.

18. A method for manufacturing an electron emitter including an emitter layer composed of a dielectric material, a first electrode disposed onto a first surface of the emitter layer, and a second electrode disposed onto the first surface, inside, or onto a second surface opposite to the first surface of the emitter layer, the method comprising:
a paste preparation step of preparing an electrode forming paste by mixing graphite, fine particles that can decompose the graphite under heating at a predetermined graphite decomposition temperature or higher, and a binder composed of a synthetic resin;
a paste layer formation step of forming a layer of the electrode forming paste prepared in the paste preparation step on a dielectric layer constituting the emitter layer;
a first heat treatment step of heat-treating the layer of the electrode forming paste formed in the paste layer formation step at a temperature lower than the graphite decomposition temperature; and
a second heat treatment step of heat-treating the layer of the electrode forming paste at a temperature equal to or higher than the graphite decomposition temperature subsequent to the first heat treatment step.

19. The method for manufacturing the electron emitter according to Claim 18, wherein the graphite decomposition temperature is a decomposition temperature of the graphite in the presence of a catalyst, and the fine particles serve as the catalyst.

20. The method for manufacturing the electron emitter according to Claim 19, wherein fine particles composed of silver or an alloy containing silver are used as the fine particles.

21. A method for manufacturing an electron emitter including an emitter layer composed of a dielectric material, a first electrode disposed onto a first surface of the emitter layer, and a second electrode disposed onto the first surface, inside, or onto a second surface opposite to the first surface of the emitter layer, the method comprising:
a paste preparation step of preparing an electrode forming paste by mixing graphite, fine particles that can decompose the graphite under heating at a predetermined graphite decomposition temperature or higher, and a binder composed of a synthetic resin that can be decomposed or vaporized at a temperature lower than the graphite decomposition temperature;
a paste layer formation step of forming a layer of the electrode forming paste prepared in the paste preparation step on a dielectric layer constituting the emitter layer; and
a heat treatment step of heat-treating the layer of the electrode forming paste formed in the paste layer formation step.

22. The method for manufacturing the electron emitter according to Claim 21, wherein the graphite decomposition temperature is a decomposition temperature of the graphite in the presence of a catalyst, and the fine particles serve as the catalyst.

23. The method for manufacturing the electron emitter according to Claim 22, wherein fine particles composed of silver or an alloy containing silver are used as the fine particles.
